# EUROPÄISCHE PATENTSCHRIFT

(11) **EP 1 381 792 B1**
(45) Veröffentlichungstag und Bekanntmachung des Hinweises auf die Patenterteilung: **12.01.2005**
(21) Anmeldenummer: 02735042.0
(22) Anmeldetag: 15.04.2002
(51) Int. Cl.: F16G 13/16

(54) **ENERGIEFÜHRUNGSKETTE**
ENERGY DRAG CHAIN
CHAINE DE GUIDAGE D'ELEMENTS DE TRANSPORT D'ENERGIE

(30) Priorität: 23.04.2001 DE 20107003 U
(43) Veröffentlichungstag der Anmeldung: 21.01.2004
(60) Teilanmeldung: 04026502.7
(73) Patentinhaber: IGUS SPRITZGUSSTEILE FÜR DIE INDUSTRIE GmbH, D-51147 Köln (DE)
(72) Erfinder: HERMEY, Andreas, 53773 Hennef (DE); BLASE, Frank, 51429 Bergisch Gladbach (DE); BLASE, Günter, 51429 Bergisch Gladbach (DE)
(74) Vertreter: Gudat, Axel, Dr.
(86) Internationale Anmeldenummer: PCT/DE2002/001407
(87) Internationale Veröffentlichungsnummer: WO 2002/086349

(56) Entgegenhaltungen:
- EP-A- 0 789 167
- US-A- 5 980 409

## Beschreibung

Die Erfindung betrifft eine Energieführungskette zur Führung von Schläuchen, Kabeln oder dergleichen mit einer Anzahl von Kettengliedern, wobei benachbarte Kettenglieder jeweils gelenkig miteinander verbunden sind, wobei die Kettenglieder gegenüberliegende Laschen mit inneren und äußeren Seitenflächen und dazu senkrechten und zur Längsrichtung der Kette im Wesentlichen parallelen Schmalflächen aufweisen, mindestens einige der Kettenglieder mindestens einen die Laschen verbindenden Quersteg aufweisen, die Gelenkverbindung benachbarter Kettenglieder zwischen den Schmalflächen der Laschen angeordnet ist und die Energieführungskette unter Bildung eines Untertrums, eines Umlenkbereichs und eines Obertrums verfahrbar ist.

Gattungsgemäße Energieführungsketten sind vielfältig bekannt, wobei zur Herstellung der Gelenkverbindung die benachbarten Laschen seitliche Überlappungsbereiche aufweisen, die mit Gelenkbolzen und korrespondierenden Ausnehmungen versehen sind. Die Gelenkverbindung ist auf halber Höhe der Laschen angeordnet. Eine derartige Energieführungskette ist beispielsweise aus der EP 0 803 032 B1 bekannt. Obwohl sich derartige Energieführungsketten prinzipiell sehr bewährt haben, weisen sie den Nachteil auf, dass die Gelenkverbindungen aus Gelenkzapfen und korrespondierender Aufnahme aufgrund von Reibungskräften einem Verschleiß unterliegen. Dieser Verschleiß führt zu einem gewissen Reparatur- bzw. Wartungsbedarf an der Energieführungskette und ist des Weiteren bei bestimmten Anwendungsgebieten wie beispielsweise im Bereich der Lebensmittelherstellung oder der Produktion von Einrichtungen unter Reinraumbedingungen wie beispielsweise von Halbleiterprodukten unerwünscht.

Des Weiteren sind beispielsweise aus der EP 0 789 167 A1 Leitungsführungseinrichtungen bekannt, bei welchen die Kettenglieder durch ein langgestrecktes flexibles Band miteinander gelenkig verbunden sind, so dass die Verfahrung der Leitungsführungseinrichtung praktisch abrieblos erfolgt. Da das langgestreckte Band an den die Laschen eines Kettengliedes verbindenden Querstegen befestigt ist, sind die Gelenkverbindungen der Kettenglieder im Bereich der unteren Enden der Laschen angeordnet. Damit ist die neutrale Faser der Leitungsführungseinrichtung, die bei der Umlenkung der Leitungsführungseinrichtung im Gegensatz zu den in der Höhe von den Gelenkverbindungen beabstandeten Bereichen keine Längenänderung erfährt, ebenfalls am unteren Ende der Kettenlaschen angeordnet. Dies ist jedoch für verschiedene Anwendungsfälle nachteilig.

Die EP 0 789 167 A1 beschreibt eine Leitungsführung bestehend aus einzelnen gegeneinander verschwenkbaren Kettengliedern und einem innerhalb der Kettenglieder zwischen den einander gegenüberliegenden Laschen derselben angeordnetem Gelenkband.

Die US 5,980,409 beschreibt eine Energieführungskette, bei welcher die Kettenglieder durch korrespondierende, sich senkrecht zur Kettenlängsrichtung erstreckende Zapfen und Gelenkausnehmungen verbunden werden.

Der Erfindung liegt somit die Aufgabe zugrunde, eine Energieführungskette mit zwischen den Schmalflächen der Kettenlaschen angeordneten Gelenkverbindungen zu schaffen, die verschleißarm und abrieblos verfahrbar ist und die einfach und kostengünstig herstellbar ist.

Die Aufgabe wird erfindungsgemäß durch eine Energieführungskette gelöst, bei welcher die Gelenkverbindungen durch in Abwinkelungsrichtung der Kettenglieder deformierbare Gelenkelemente gebildet werden, die als separate Bauteile ausgeführt sind, wobei die Gelenkelemente sich zumindest teilweise zwischen der inneren und äußeren Seitenfläche der Laschen erstrecken.

Durch die erfindungsgemäße Ausbildung der Energieführungskette ist eine abrieblose Verfahrung der Kette möglich, wobei das Gelenkelement bezüglich Anordnung an den Laschen, Dimensionierung und insbesondere der Materialwahl den jeweiligen Anforderungen optimal und unabhängig von der Ausbildung der Laschen angepasst werden kann. So können die Laschen und die Gelenkelemente aus unterschiedlichen Materialien, insbesondere aus unterschiedlichen Kunststoffmaterialien, bestehen. Die Gelenkelemente können so aus einem Material mit hoher Dauerbiegefestigkeit, Kerbzähigkeit und/oder geeigneter Elastizität bestehen. Die elastischen Eigenschaften des Gelenkelementes sind vorzugsweise so eingestellt, dass das Gelenkelement bei jeder bestimmungsgemäßen Biegebeanspruchung im elastischen Bereich bleibt und bei einer Deformation elastische Rückstellkräfte auf die durch das Gelenkelement verbundenen Laschen ausübt. Das Material der Laschen kann eine besonders hohe Formstabilität (gegen Zug-, Torsions- und/oder Druckkräfte) und hohe Biegesteifigkeit der Laschen und auch der Kettenglieder insgesamt gewährleisten. Das Material kann besonders eine niedrige Gleitreibung aufweisen, was bei Energieführungsketten vorteilhaft ist, bei welchen bei der Verfahrung der Energieführungskette das Obertrum gleitend auf dem Untertrum geführt wird.

Aufgrund der erfindungsgemäßen separaten Ausführung von Laschen und Gelenkelementen können die Laschen so ausgebildet sein, dass sie nahezu sämtliche auf die Energieführungskette in Längsrichtung wirkenden Druck- und Zugkräfte aufnehmen, während die Funktion der Gelenkelemente sich ausschließlich auf die Bildung von Gelenkverbindungen ohne nennenswerte Beanspruchung durch Druck- und Zugkräfte beschränkt.

Vorzugsweise sind die Gelenkelemente elastisch deformierbar.

Das elastisch deformierbare Gelenkelement greift bei Verschwenkung vorzugsweise über den gesamten Verschwenkwinkel an beiden benachbarten Kettengliedern mit elastischen Rückstellkräften an. Das Gelenkelement erstreckt sich bei gestreckter Anordnung der Energieführungskette vorzugsweise geradlinig in Längsrichtung derselben. Die Schmalflächen stehen im Wesentlichen senkrecht zu den inneren und äußeren Seitenflächen der Kettenglieder.

Vorzugsweise erstreckt sich das Gelenkelement gänzlich zwischen der inneren und äußeren Seitenfläche der Laschen. Die Breite der Gelenkelemente kann genau der Breite der Laschen auf Höhe der Gelenkelemente entsprechen, so dass von den Laschen seitlich vorstehende Bereiche der Gelenkelemente vermieden werden.

Die Kettenglieder können jeweils einen oberen und unteren Quersteg aufweisen, die den Zwischenraum der gegenüberliegenden Laschen nach außen abgrenzen, wobei einer der Querstege auch als geteilter Quersteg ausgeführt sein kann. Bei der erfindungsgemäßen Konstruktion ist es z. B. bei Verwendung hintergreifender Anschläge auch möglich, nur jedes zweite oder dritte usw. Kettenglied innerhalb der Kette mit Querstegen zu versehen. Der die gegenüberliegenden Laschen verbindende Quersteg kann an den Laschen einstückig angeformt oder lösbar, insbesondere mittels geeigneter Rastverbindungen oder anderer Befestigungselemente befestigt sein. Vorzugsweise ist zumindest einer der Querstege biegesteif ausgeführt und biegesteif an den gegenüberliegenden Laschen befestigt.

Vorzugsweise ist das Gelenkelement bei in Montageanordnung langgestreckter Energieführungskette in der Höhe zwischen dem oberen und unteren Quersteg, falls vorhanden, oder den Befestigungselementen für Querstege und in der Höhe von den Querstegen beabstandet angeordnet, insbesondere in einem mittleren Bereich der Laschenhöhe, der von der Unterkante der Laschen um mehr als ein Viertel der Laschenhöhe beabstandet ist. Insbesondere kann das Gelenkelement auf halber Höhe der Laschen angeordnet sein. Hierdurch können die Kettenglieder symmetrisch zu der neutralen Faser der Energieführungskette angeordnet sein, wobei die neutrale Faser bei der Umlenkbewegung der Kette aus der gestreckten in die gekrümmte Anordnung keine Längenänderung erfährt. Dies ist für verschiedene Anwendungszwecke vorteilhaft, da die geführten Leitungen bei der Abwinkelungsbewegung der Energieführungskette gleichmäßiger beansprucht werden.

Vorzugsweise weisen die Kettenglieder Mittel zur Geräuschdämpfung der bei der Betätigung der Anschläge entstehenden Geräusche auf. Die Geräuschdämpfungsmittel sind vorzugsweise als Bremsen ausgeführt, die im Bereich der Anschläge und/oder der korrespondierenden Anschlagflächen angeordnet sind. Die Geräuschdämpfungsmittel können insbesondere in die Anschläge aufnehmenden Taschen der korrespondierenden Lasche angeordnet sein. Die Anschlagflächen, die zugleich die Taschen an den Laschenstirnseiten begrenzen und daher stegartig ausgeführt sein können, können federnd ausgebildet sein, beispielsweise durch geeignete Materialwahl oder Materialstärke, wobei das Material der Anschlagflächen ein höheres Elastizitätsmodul als das Material der angrenzenden Laschenbereiche aufweisen kann. Alternativ und/oder zusätzlich können die Anschläge selber federnd ausgebildet sein, beispielsweise zumindest teilweise aus einem Material erhöhter Elastizität bestehen. Es können an den Anschlägen und/oder korrespondierenden Anschlagflächen, vorzugsweise innerhalb den die Anschläge aufnehmenden Taschen, auch separate Dämpfungselemente, beispielsweise in Form von Dämpfungsstreifen aus einem geräuschdämpfenden Material, vorgesehen sein. Die Anschläge und die korrespondierenden Anschlagflächen können zusätzlich oder alternativ auch eine Gestalt aufweisen, so dass ein erster Teilbereich eines Anschlages mit einem ersten Teilbereich der korrespondierenden Anschlagfläche zu einem ersten Zeitpunkt und ein zweiter Teilbereich des Anschlages mit einem zweiten Teilbereich der Anschlagfläche zu einem späteren Zeitpunkt zur Anlage kommt, so dass am Ende des Anschlagvorganges die gesamte Wirkfläche des Anschlages mit der korrespondierenden Anschlagfläche anliegt.

Besonders bevorzugt sind die Gelenkelemente als Federelemente ausgeführt, die bei einer Abwinkelung der Kettenglieder aus der Stellung bei langgestreckter Energieführungskette elastische Rückstellkräfte auf die benachbarten Kettenglieder ausüben. Hierdurch wird eine Geräuschdämpfung bei der Fahrbewegung der Energieführungskette erzielt. Vorzugsweise wird durch die elastischen Rückstellkräfte eine Rückstellbewegung der Kettenglieder über den gesamten Verschwenkwinkel der Kettenglieder ausgeübt. Die Rückstellkräfte können eine Höhe annehmen,. dass eine Rückstellbewegung der Kettenglieder bis in die Anschlagstellung der Kettenglieder bei langgestreckter Energieführungskette selbsttätig erfolgt. Dies kann für die unbeladene als auch für die mit mindestens einer zu führenden Einrichtung wie einem Schlauch, einer Leitung oder dergleichen beladenen Energieführungskette oder für die maximal beladene Energieführungskette gelten.

Die Gelenkelemente können vielgestaltig ausgeführt sein. Sie können zwischen den Haltebereichen einen sich ändernden Querschnitt und/oder Bereiche unterschiedlicher Materialstärke aufweisen. Der Querschnitt und/oder die Materialstärke nehmen mit Abstand von den Haltebereichen vorzugsweise zu und können im mittleren Bereich des Gelenkelementes maximal sein. Der Querschnitt und/oder Materialstärke können auch ausgehend von dem jeweiligen Haltebereich in einem ersten Abschnitt konstant sein und ab einem Abstand von dem Haltebereich variieren, insbesondere in dem Querschnitt und/oder der Materialstärke zunehmen oder eine Materialschwächung, beispielsweise eine Einschnürung oder einen inneren Hohlraum aufweisen. Die Änderung des Querschnittes und/oder der Materialstärke erfolgen vorzugsweise in der Hauptebene der zugehörigen Kettenlaschen. Eine Querschnittsänderung kann insbesondere durch einen Höhenund/oder Seitenversatz eines Bereiches des Gelenkelementes erfolgen. Eine Materialschwächung kann bei konstantem oder sich ändernden Querschnitt des jeweiligen Bereiches des Gelenkelementes erfolgen, wobei der Querschnitt zu- oder abnehmen kann. So kann ein innerer Hohlraum bei konstanten oder sich änderndem Querschnitt des Gelenkelementes vorgesehen sein, es kann auch ein geschlossener oder offener, insbesondere in Montagelage seitlich offener Hohlraum vorgesehen sein, der einer Materialteilung, bei der verschiedene Stränge mit insgesamt konstanter Materialstärke ausgebildet werden, entsprechen kann. Die einzelnen Stränge können unterschiedliche Formen aufweisen und beispielsweise geradlinig oder gebogen ausgeführt sein und Ein- und/oder Ausbauchungen aufweisen, wobei beliebige Kombinationen möglich sind. Die Änderung des Querschnittes und/oder der Materialstärke kann jeweils kontinuierlich oder stufenweise erfolgen. Durch die verschiedene Ausgestaltung der Gelenkelemente können die Verfahreigenschaften der Energieführungskette eingestellt werden, z.B. die zur Abwinkelung der Laschen erforderliche Kraft, deren Änderung bei sich änderndem Verschwenkwinkel oder die Geräuschdämpfungseigenschaften der Gelenkelemente, die auf der Ausübung von Rückstellkräften bei der Abwinkelung beruhen können. Dies ist insbesondere bei austauschbaren Gelenkelementen von Bedeutung.

Bei Ausführung des Gelenkelementes als Federelement können die Kettenglieder jeweils mit Anlageflächen versehen sein, die über den gesamten Verschwenkwinkel an dem Gelenkelement angreifen und hierbei die bei der elastischen Deformation des Gelenkelementes aufgrund der Abwinkelung der Kettenglieder auf die Kettenglieder wirkenden elastischen Rückstellkräfte aufnehmen. Vorzugsweise ist das Gelenkelement im Presssitz zwischen den Anlageflächen angeordnet. Die Anlageflächen der Laschen sowie die korrespondierenden Flächen des Gelenkelementes stellen vorzugsweise ebene Flächen dar, deren Flächennormalen parallel zur inneren und äußeren Seitenfläche der Laschen liegen und die bei langgestreckter Energieführungskette senkrecht zur Längsrichtung derselben stehen.

Das Gelenkelement kann als plattenartiges Bauteil ausgeführt sein, worunter auch ein bandförmiges Bauteil zu verstehen ist. Das Gelenkelement weist dann im Wesentlichen ebene Ober- und Unterseiten auf, die den Ober- und Unterseiten der Laschen zugewandt sind. Vorzugsweise liegen die Kettenlaschen mit Bereichen an der Ober- und/oder Unterseite der ebenen Bereiche der Gelenkelemente an. Die Gelenkelemente können jedoch auch andere geignete Querschnitte aufweisen.

Andererseits kann das Gelenkelement auch als in der Ebene parallel zu der inneren und äußeren Seitenfläche der Laschen gekrümmtes Bauteil ausgebildet sein, so dass es bei in Längsrichtung geradem Einbau in die Laschen eine Vorspannung in einer Abwinkelungsrichtung bewirkt.

Das Gelenkelement kann mit Haltebereichen an beiden benachbarten Seitenlaschen angreifen, die in Längsrichtung der Energieführungskette wirkende Zugkräfte aufnehmen. Hierzu kann das Gelenkelement an den benachbarten Laschen kraft-, form- und/oder stoffschlüssig befestigt sein. Die zugaufnehmende Befestigung der Gelenkelemente an den Laschen kann derart ausgeführt sein, dass diese lediglich für geringe Zugkräfte ausgelegt ist, beispielsweise um die Montage der Energieführungskette zu erleichtern. Hierzu können die Haltebereiche der Gelenkelemente, vorzugsweise an den freien, den elastisch deformierbaren Bereichen abgewandten Enden derselben, ober- und unterseitige Vorsprünge aufweisen, die sich über die gesamte Breite der Gelenkelemente erstrecken können. Zur Aufnahme höherer Zugkräfte können bei Bedarf zusätzliche zugaufnehmende Mittel vorgesehen sein.

Das jeweilige Gelenkelement kann zur gelenkigen Verbindung von genau zwei einander in Längsrichtung der Energieführungskette benachbarten Kettengliedern ausgeführt sein. Das Gelenkelement kann auch mehrere Kettenglieder gelenkig miteinander verbinden und sich hierzu über die Länge einer Vielzahl von Kettengliedern, beispielsweise drei bis zehn oder mehr Kettengliedern erstrecken. Es können somit mehrere in Längsrichtung der Energieführungskette aufeinander folgende Gelenkelemente vorgesehen sein, die jeweils nur Kettenglieder eines Abschnittes der Energieführungskette gelenkig miteinander verbinden. Hierdurch muss bei einem notwendigen Austausch eines Gelenkelementes nicht die gesamte Energieführungskette, sondern nur ein Teilbereich derselben demontiert werden. Die Gelenkelemente können sich gegebenenfalls auch jeweils über die gesamte Länge der Energieführungskette erstrecken. Verbindet das Gelenkelement jeweils mehr als zwei Kettenglieder miteinander, so können jeweils zwischen den Haltebereichen der Gelenkelemente, mit denen diese an den beiden benachbarten Kettengliedern verbunden sind, Verbindungsbereiche vorgesehen sein, die eine geringere Breite als die Laschen und/oder als die elastisch deformierbaren Bereiche der Gelenkelemente aufweisen. Hierdurch können die sich über mehrere Laschen erstreckenden Gelenkelemente einteilig gehandhabt werden. Die Verbindungsbereiche können im Querschnittsbereich der Laschen angeordnet sein und außenseitig an den Kettengliedern abschließen. Die ober- und unterhalb der Gelenkelemente angeordneten Bereiche der Laschen können hierbei durch einen Steg verbunden sein, so dass die Laschen einstückig ausgebildet sind.

Vorzugsweise sind die Gelenkelemente in Ausnehmungen der Kettenlaschen angeordnet. Die Ausnehmungen sind vorzugsweise stirnseitig in Richtung auf die benachbarte Lasche, die durch das jeweilige Gelenkelement verbunden wird, geöffnet. Zusätzlich oder alternativ hierzu und unabhängig von der Länge der Gelenkelemente können die die Gelenkelemente aufnehmenden Ausnehmungen an den Kettenlaschen an den Seitenflächen, die dem Energieführungsketteninneren zu- und/oder abgewandt sind, hin geöffnet sein, so dass die Gelenkelemente in einer Richtung quer, vorzugsweise senkrecht, zu der Hauptebene bzw. den Seitenflächen der Laschen in die Ausnehmungen einführbar und an den Laschen befestigbar sind.

Das Gelenkelement kann durch kraftschlüssige, formschlüssige und/oder stoffschlüssige Verbindung mit den Laschen gegen eine Demontage von den Laschen senkrecht zur Hauptebene der Laschen und/oder gegen eine Verdrehung quer zu den Laschen an diesen gesichert sein, insbesondere wenn das Gelenkelement in einer seitlich offenen Ausnehmung der Laschen angeordnet ist.

Vorzugsweise weist jeweils zumindest eine, vorzugsweise beide, der jeweils benachbarten Laschen an der der benachbarten Lasche zugeordneten Stirnseite auf Höhe des Gelenkelementes eine stirnseitig offene Ausnehmungen auf, durch die sich das Gelenkelement erstreckt. Die Ausnehmung erstreckt sich zumindest ausgehend von der gestreckten Anordnung der Energieführungskette auf der der Abwinkelungsrichtung der Glieder zugewandten Seite der Gelenkelemente, vorzugsweise beidseitig der Gelenkelemente. Durch dieses Spiel wird eine Verbiegung des Gelenkelementes in Art einer Blattfeder ermöglicht, bei welchem der mittlere Bereich des elastisch deformierbaren Bereichs des Gelenkelementes einen geringfügigen Höhenversatz gegenüber den beiden benachbarten Laschen während der Verschwenkbewegung durchführt. Hierdurch ergibt sich eine ruhigere und geräuschärmere Abrollbewegung der Energieführungskette.

Die Ausnehmung erstreckt sich vorzugsweise ausgehend von dem Gelenkelement auf Höhe der Verschwenkachse der benachbarten Laschen zueinander, vorzugsweise in der Höhe der Laschen und/oder in Längsrichtung der Energieführungskette über mehr als die halbe oder mehr als die doppelte Stärke des Gelenkelementes, beispielsweise über etwa die drei- bis fünffache Stärke des Gelenkelementes oder mehr. Die sich durch die beiden einander zugewandten Ausnehmungen der benachbarten Laschen ergebende Ausnehmung kann eine kreisförmige, elliptische oder andere geeignete Gestalt aufweisen. Die Längserstreckung der Ausnehmung kann 20 bis 60 %, vorzugsweise 35 bis 45 %, z. B. ca. 40 % der Länge des Gelenkelementes bzw. des Abstandes der das Gelenkelement an den Laschen sichernden Formschlussmittel betragen. Vorteilhafterweise erstreckt sich die Ausnehmung ausgehend von dem Gelenkelement nur über einen Teilbereich der Laschenhöhe und endet in einem Abstand von der Ober- bzw. Unterkante der Lasche.

Die einander benachbarten Laschen weisen vorzugsweise zusammenwirkende Mittel auf, die auf die Energieführungskette wirkende Druck- und/oder Zugkräfte aufnehmen. Hierdurch erfolgt eine Druck- und/oder Zugentlastung der Verbindungsbereiche der Gelenkelemente mit den Laschen. Vorzugsweise sind die druckund/oder zugkraftaufnehmenden Mittel als korrespondierende Vorsprünge und hinterschnittene Bereiche in Form von Ausnehmungen der benachbarten Laschen ausgebildet. Die Vorsprünge sind vorzugsweise an den innen bzw. außen liegenden Seiten der Laschen angeordnet und erstrecken sich seitlich von diesen in Richtung auf das Innere der Energieführungskette oder in entgegengesetzter Richtung. Die Ausnehmungen zur Aufnahme der Vorsprünge sind in Kettenlängsrichtung durch ein druck- und/oder zugkraftaufnehmendes Widerlager für die Vorsprünge begrenzt, so dass in Längsrichtung der Kette Zug- und/oder Druckkräfte aufgenommen werden können. Die Ausnehmung kann teilumfänglich oder vollumfänglich geschlossen sein. Die zug- und/oder druckaufnehmenden korrespondierenden Bereiche der benachbarten Laschen können auch als korrespondierende Anschläge zur Begrenzung des Verschwenkwinkels der benachbarten Kettenglieder zueinander ausgeführt sein.

Vorteilhafterweise weisen die Laschen in Richtung auf die benachbarten Laschen vorspringende, diese seitlich umgreifende Überlappungsbereiche auf. Vorzugsweise sind die Überlappungsbereiche an jeder Lasche ober- und unterhalb der Gelenkelemente vorgesehen. Die Überlappungsbereiche können hierbei von einem bezüglich der Kettenlängsrichtung mittleren Bereich der Laschen ausgehen, dessen Wandstärke größer als die Wandstärke der Überlappungsbereiche ist. Durch die Überlappungsbereiche wird die Seitenstabilität der Energieführungskette beträchtlich erhöht.

Vorzugsweise sind die einer benachbarten Lasche zugeordneten Überlappungsbereiche einer gegebenen Lasche, die ober- und unterhalb des Gelenkelementes angeordnet sind, durch eine dem Mittelbereich der Lasche gegenüberliegende Aussparung voneinander getrennt, wobei sich die Aussparung über die gesamte Laschenbreite erstreckt. Die Aussparung erstreckt sich vorzugsweise auch auf Höhe des jeweiligen Gelenkelementes und kann bezogen auf einen durch den Gelenkelementmittelpunkt geschlagenen in der Laschenhauptebene liegenden Kreis eine kreissegmentförmige Gestalt aufweisen. Hierdurch kann die Länge der Lasche und damit auch deren Gewicht wesentlich reduziert werden. Die Überlappungsbereiche erstrecken sich vorzugsweise im Wesentlichen über lediglich den Verschwenkwinkel der Laschen zuzüglich der Wandstärke von Vorsprüngen bzw. mit diesen korrespondierenden Anlagebereichen, die den Verschwenkwinkel begrenzen oder als zug- und/oder druckkraftaufnehmende Mittel fungieren. Diese Bereiche sind vorzugsweise stegartig ausgeführt und erstrecken sich senkrecht zur Verschwenkrichtung der Laschen.

Des Weiteren sind die einer benachbarten Lasche zugewandten ober- und unterhalb des Gelenkelementes angeordneten Überlappungsbereiche vorzugsweise an unterschiedlichen Seiten der Laschen, d. h. an der außen bzw. innen liegenden Seitenfläche, bzw. auf unterschiedlichen Seiten der Mittelhauptebene der Laschen angeordnet. Hierunter sollen auch Anordnungen erfasst sein, bei denen die Überlappungsbereiche von den am weitesten außen bzw. innen liegenden Bereichen der Laschen, z. B. etwaigen Dickstellenbereichen, einen lateralen Abstand aufweisen. Die Überlappungsbereiche weisen somit einen seitlichen Versatz zueinander auf. Die korrespondierenden Überlappungsbereiche der benachbarten Laschen liegen hierbei vorzugsweise nur jeweils einem Überlappungsbereich der jeweils benachbarten Lasche seitlich gegenüber. Hierdurch wird die Seitenstabilität der Energieführungskette zusätzlich erhöht. Insbesondere können an zumindest einem oder an beiden der obigen genannten Überlappungsbereiche seitwärts in Richtung auf den korrespondierenden Überlappungsbereich der benachbarten Lasche vorstehende Vorsprünge vorgesehen sein, die beispielsweise als Anschläge oder als Zugentlastungsmittel bzw. als Druckkraftaufnahmemittel ausgeführt sein können, ohne hierauf beschränkt zu sein, so dass die benachbarten Laschen zur Montage um deren Längsachsen verkippt oder verschränkt stirnseitig miteinander zur Anlage gebracht werden und anschließend um deren Längsachsen verdreht werden, um die bezüglich der Mittelhauptebene einander gegenüberliegenden Überlappungsbereiche seitlich miteinander zur Anlage zu bringen, wobei die Vorsprünge einander hintergreifen. Durch diese Anordnung wird eine Energieführungskette besonders hoher Torsionsstabilität geschaffen.

Die einer benachbarten Lasche zugewandten Überlappungsbereiche können jedoch auch, wie bei herkömmlichen Gliederketten, auf derselben Seite der Laschenmittelebene angeordnet sein.

Die jeweils außenseitig bzw. jeweils innenseitig an der Lasche angeordneten Überlappungsbereiche können einander diametral gegenüberliegend angeordnet sein, so dass einer der Überlappungsbereiche oberhalb und ein anderer unterhalb der Gelenkverbindung angeordnet ist.

Anordnung und Geometrie der Überlappungsbereiche können vielfältig variiert werden. Eine besonders vorteilhafte Ausgestaltung liegt vor, wenn die Laschen mit zumindest zwei Überlappungsbereichen versehen sind, die der jeweils benachbarten Lasche zugewandte freie Stirnseiten mit zu einer senkrecht zur Kettenlängsrichtung stehenden, in der Laschenhauptebene liegenden Richtung R unterschiedlichen Winkeln W1, W2 aufweisen. Die Stirnseiten stehen hierbei vorzugsweise im Wesentlichen senkrecht zur Verschwenkrichtung der benachbarten Kettenglieder zueinander. Vorzugsweise sind die Überlappungsbereiche mit unterschiedlich geneigten Stirnseiten nur einer benachbarten Lasche zugeordnet. Hierbei können die Laschen jeweils 4 Überlappungsbereiche aufweisen, die jeweils einer benachbarten Lasche zugewandt sind, wobei die Stirnseiten von drei oder weniger der Überlappungsbereiche senkrecht oder im Wesentlichen senkrecht zur Kettenlängsrichtung stehen und die Stirnseite zumindest eines oder mehrer der Überlappungsbereiche schräg zur Kettenlängsrichtung verlaufen. Der stirnseitige Winkel zur senkrecht zur Kettenlängsrichtung verlaufenden Richtung kann hierbei ca. 15-60°, vorzugsweise ca. 30° betragen. Insbesondere können an jeweils einer Lasche zwei unterschiedliche Arten von Überlappungsbereichen ausgeführt sein, die jeweils eine unterschiedliche Winkelerstreckung von der oben definierten Senkrechten aufweisen. Hierbei können sämtliche Überlappungsbereiche sich über den gleichen Verschwenkwinkel erstrecken, der im Wesentlichen dem maximalen Verschwenkwinkel der benachbarten Kettenglieder zueinander entspricht.

Vorzugsweise sind die benachbarten Laschen mit mindestens einem Vorsprung versehen, der von einem Bereich der benachbarten Lasche mit geringem oder ohne Spiel übergriffen wird, wodurch ein Höhenversatz der Laschen zueinander verhindert wird. Das Spiel ist vorzugsweise derart bemessen, dass die Bereiche bei der Verschwenkbewegung der Kettenglieder ohne Kontaktierung aneinander geführt werden, wodurch ein Abrieb verhindert wird. Bei einer Krafteinwirkung auf die Laschen, die einen Höhenversatz der Laschen zueinander bedingt, kommen die einander übergreifenden Bereiche der benachbarten Laschen miteinander zum Angriff, wodurch der Höhenversatz beschränkt wird. Vorzugsweise übergreifen die genannten Bereiche der benachbarten Laschen einander über den gesamten Verschwenkwinkel, so dass über den gesamten Verschwenkwinkel ein Höhenversatz der Laschen zueinander verhindert wird. Das Spiel kann zumindest in einer oder beiden Anschlagstellungen der Kettenglieder auf null reduziert sein. Die den Höhenversatz verhindernden Vorsprünge können gleichzeitig als Anschlagmittel fungieren. Sie können an den Überlappungsbereichen oder an dem Mittelbereich der Laschen angeordnet sein und seitlich von den Laschen nach innen oder außen vorstehen oder sich in der Hauptebene der Laschen erstrecken. Die Vorsprünge können im Bereich der Oberkante der Laschen, benachbart den Gelenkelementen oder an anderer geeigneter Stelle angeordnet sein.

Ferner sind vorzugsweise an benachbarten Laschen miteinander wechselwirkende Anschläge vorgesehen, die den Verschwenkwinkel der Laschen in beiden Verschwenkendstellungen begrenzen. Die Anschläge können als Vorsprünge ausgeführt sein, die sich in der Hauptebene der Laschen erstrecken und hierbei in Längsrichtung der Energieführungskette von dem mittleren Laschenbereich, an dem Überlappungsbereiche angeformt sein können, vorspringen. Die Anschläge können sich zugleich seitlich an die Überlappungsbereiche anschließen. Selbstverständlich können auch andere geeignete Anschläge vorgesehen sein.

Vorzugsweise sind die Anschläge unmittelbar benachbart den Gelenkelementen angeordnet, wodurch die Anschläge mit nur geringer Bogengeschwindigkeit aufeinander auftreffen, so dass die Energieführungskette geräuscharm verfahren werden kann. Vorzugsweise sind die Anschläge unmittelbar radial außen liegend zu Ausnehmungen angeordnet, die das jeweilige Gelenkelement mit Spiel umgeben, um die Abwinkelung des Gelenkelementes zu erleichtern. Vorzugsweise sind die Anschläge an der dem Energieführungsketteninneren zugewandten Seite der Mittelbereiche der Laschen angeordnet und können mit dem benachbarten Überlappungsbereich eine gemeinsame Seitenfläche aufweisen. Die Wandstärke des Anschlages entspricht somit in etwa der halben Wandstärke des gleichen Mittelbereichs.

Die Laschen eines Kettengliedes können in Art von gekröpften Laschen, die spiegelsymmetrisch zueinander sein können, ausgeführt sein. Die Energieführungskette kann auch durch gegenüberliegende Laschenstränge aus alternierenden Innen- und Außenlaschen oder in anderer geeigneter Weise, z. B. durch gabelförmige Laschen, aufgebaut sein.

Die Erfindung wird nachfolgend beispielhaft beschrieben und anhand der Figuren beispielhaft erläutert. Es zeigen:
- Fig. 1: eine perspektivische Darstellung einer erfindungsgemäßen Energieführungskette,
- Fig. 2: eine Darstellung einer ersten Lasche eines Kettengliedes der Energieführungskette nach Figur 1 in Seitenansicht (Figur 2a, c) in Draufsicht (Figur 2b) und in perspektivischer Darstellung (Figur 2d, e),
- Fig. 3: eine perspektivische Darstellung einer weiteren Ausführungsform einer erfindungsgemäßen Energieführungskette,
- Fig. 4: Seitenansicht eines Gelenkelementes nach einer weiteren Ausführungsform.
- Fig. 5: verschiedene Gelenkelemente in Seitenansicht und in Draufsicht.

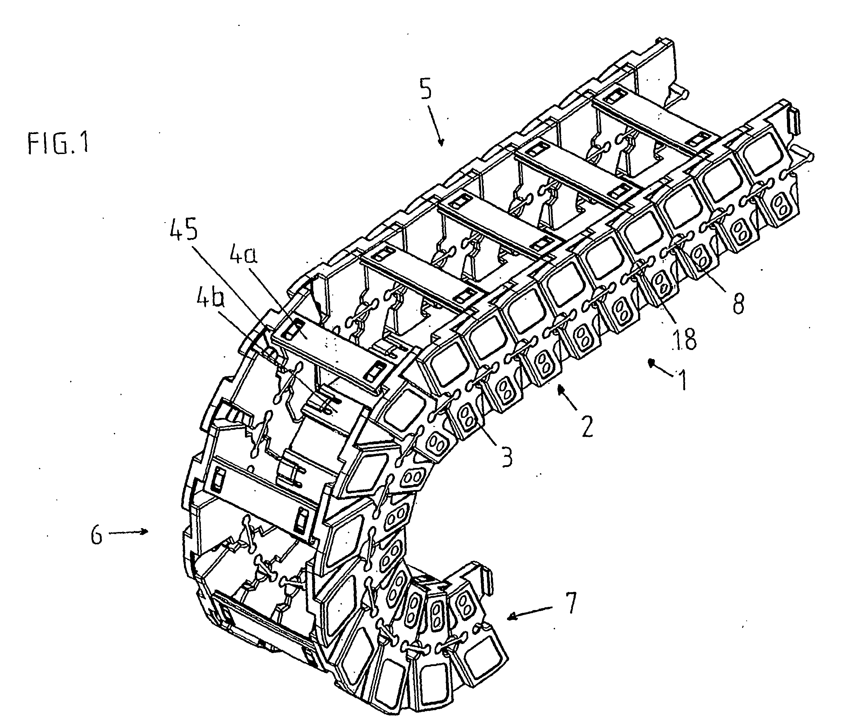

Die in Figur 1 gezeigte erfindungsgemäße Energieführungskette 1 besteht aus einer Vielzahl gelenkig miteinander verbundener Kettenglieder 2, die jeweils aus zwei parallel zueinander angeordneten, spiegelsymmetrisch zueinander ausgeführten Laschen 3 bestehen, welche durch jeweils einen oberen und unteren Quersteg 4a,4b miteinander verbunden sind. Die Querstege 4a, 4b sind nach dem Ausführungsbeispiel durch Rastmittel lösbar an den Laschen 3 befestigt. Durch die formstabilen Laschen und zumindest einen biegesteifen Quersteg, der stabil an den Laschen befes-. tigt ist, werden formstabile, verdreh- und torsionssteife Kettenglieder gebildet. Nach dem Ausführungsbeispiel kann zumindest einer der Querstege zumindest teilweise das Innere der Energieführungskette freigeben, um die zu führenden Schläuche, Kabel oder dergleichen in dem durch die Laschen und Querstege definierten Führungskanal der Energieführungskette anzuordnen. Die dargestellte Energieführungskette kann bogenförmig unter Bildung eines Untertrums 5, von dem lediglich eine Lasche des ersten Kettengliedes dargestellt ist, einem Umlenkbereich 6 und einem Obertrum 7 angeordnet werden.

Die Kettenglieder 2 sind durch Gelenkelemente 8 miteinander verbunden, die nach dem Ausführungsbeispiel jeweils genau zwei einander benachbarte Laschen 3 gelenkig miteinander verbinden, die alleine die Gelenkverbindung ausbilden. Die Gelenkelemente 8 sind als im Wesentlichen plattige Bauteile ausgeführt, die sich über die gesamte Breite der Laschen 3 erstrecken und bündig mit den innen und außen liegenden Seitenflächen 9, 10 abschließen. Die Breite und Länge der elastisch deformierbaren Bereiche der Gelenkelemente 8 beträgt hierbei ein Mehrfaches der Stärke derselben.

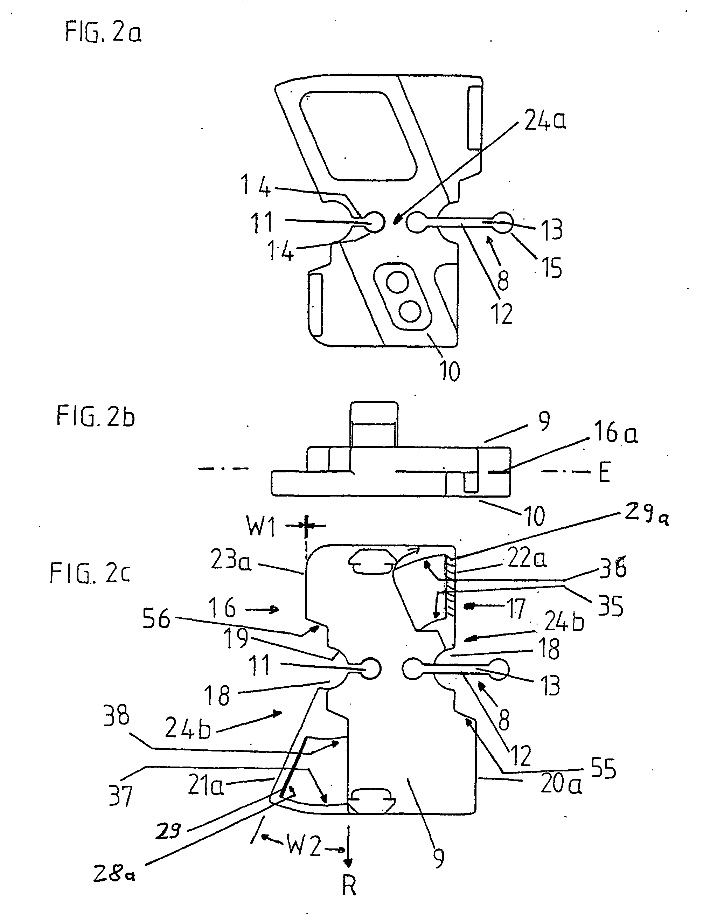

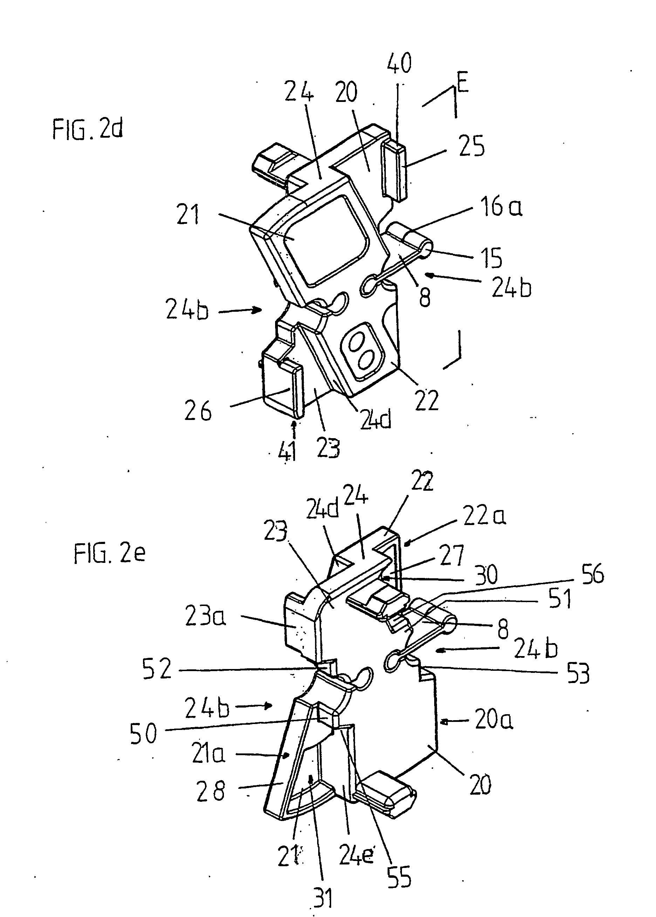

Wie auch aus Figur 2 ersichtlich ist, sind die Gelenkelemente 8 in seitlich offenen Ausnehmungen 11 der Laschen 3 angeordnet, wobei nach dem Ausführungsbeispiel die Ausnehmungen 11 sowohl zur inneren als auch äußeren Seitenfläche 9, 10 hin offen ausgeführt sind. Die Gelenkelemente 8 können somit seitlich zu den Laschen 3 in die Ausnehmungen 11 eingeführt und in diesen festgelegt werden. Das Gelenkelement 8 ist in Abwinkelungsrichtung der Kettenglieder elastisch deformierbar und in Art eines scharnierartigen Federelementes ausgeführt, das in Art einer Blattfeder wirkt. Das Gelenkelement 8 übt nach Abbiegung aus dessen langgestreckter Ruhestellung elastische Rückstellkräfte auf die benachbarten Kettenlaschen aus, so dass die Kettenlaschen vollständig in deren Ausgangsposition unter Ausbildung eines langgestreckten Abschnittes der Energieführungskette rücküberführt werden. Das Gelenkelement kann aber auch so ausgeführt sein, dass im Wesentlichen keine Rückstellkräfte ausgeübt werden, wozu ein filmscharnierartiger Gelenkbereich vorgesehen sein kann.

Das Gelenkelement 8 weist somit einen mittleren elastisch deformierbaren Bereich 12 auf, der zwischen den Stirnseiten der benachbarten Laschen 2 angeordnet ist und an den beidseitig Haltebereiche 13 angrenzen, die passgenau an den die Ausnehmung 11 begrenzenden Flächen 14 der Laschen 2 anliegen. Die Haltebereiche 13 weisen auf der dem mittleren Bereich 12 abgewandten Seite Querschnittserweiterungen 15 auf, die eine Hinterschneidung der Lasche hintergreifen, so dass die Gelenkelemente gegen Längsverschiebung gesichert in der Ausnehmung 11 angeordnet sind. Unabhängig hiervon sind die Gelenkelemente gegen eine Verschwenkung quer zu den Laschen gesichert, wozu ebenfalls Formschlussmittel vorgesehen sind, die hier ebenfalls durch die Querschnittserweiterung 15, die sich über die gesamte Breite der Gelenkelemente erstreckt, bereitgestellt werden. Ferner weisen die Haltebereiche 13 der Gelenkelemente (siehe Figur 2a, 2c) Mittel auf, die die Gelenkelemente 8 gegen eine Querverschiebung zu den Laschen 2 sichern, welche hier als zusätzliche Formschlussmittel in Form einer in die Querschnittserweiterung 15 eingebrachten, sich über einen Umfangsbereich erstreckenden Nut 16a ausgeführt sind (Fig. 2b, d), in welche ein korrespondierender Vorsprung der Lasche 2 eingreift. Der Haltebereich des Gelenkelementes einschließlich der Querschnittserweiterung wird eng bzw. im Presssitz von der Lasche umschlossen.

Das Gelenkelement ist durch die weiter unten beschriebene Ausgestaltung der Laschen von in Kettenlängsrichtung und/oder Querrichtung wirkenden Zug- und/oder Druckkräften praktisch vollständig entlastet.

Das Gelenkelement ist auf halber Höhe der Laschen 2 angeordnet. Der Abstand der Mittelpunkte beider Gelenkelemente einer Lasche beträgt weniger als die Höhe der Lasche, hier ca. der halben Höhe, so dass die Laschen relativ schmal ausgebildet sind, was die Abrolleigenschaften der Kette verbessert. Die Laschen 2 und die als separate Bauteile ausgeführten Gelenkelemente 8 bestehen aus unterschiedlichen Kunststoffmaterialien.

An den der jeweils benachbarten Lasche zugewandten Stirnseiten 16, 17 der Laschen (Fig. 2c) sind auf Höhe der Gelenkelemente 8 stirnseitig offene Ausnehmungen 18 vorgesehen, die sich in die Laschen 2 hineinerstrecken. Der die Ausnehmung 18 begrenzende Rand 19 der Lasche weist ober- und unterhalb des Gelenkelementes 8 einen Abstand zu diesem auf, der hier größer als die Stärke des Gelenkelementes 8 ist, so dass eine Biegung des Gelenkelementes über einen größeren Biegeradius möglich ist.

Bei montierter Energieführungskette ergänzen sich die einander zugewandten Ausnehmungen 18 der benachbarten Laschen zu einer gemeinsamen Ausnehmung, die sich über die gesamte Länge des elastisch deformierbaren mittleren Bereichs 12 des Gelenkelementes erstreckt. Die Länge des mittleren deformierbaren Bereichs des Gelenkelementes entspricht ca. 40 % der Gesamtlänge und der vierfachen Wandstärke desselben.

Die Laschen 2 weisen ferner gemäss Figur 2 Überlappungsbereiche 20 bis 23 auf, die paarweise mit Überlappungsbereichen der beiden benachbarten Laschen überlappen, wodurch die Seitenstabilität der Kettenglieder wesentlich erhöht wird. Die Überlappungsbereiche 20 bis 23 stehen von einem mittleren Bereich 24 der Laschen stirnseitig in Richtung auf die benachbarten Laschen vor, wobei der mittlere Bereich 24 verglichen mit den Überlappungsbereichen eine größere Wandstärke aufweist. Jedem der benachbarten Laschen sind somit zwei Überlappungsbereiche 20, 22 bzw. 21, 23 zugeordnet, die jeweils oberhalb (20, 21) bzw. unterhalb (22, 23) des Gelenkelementes 8 angeordnet sind und durch eine sich über die Breite der Laschen erstreckende Aussparung 24b getrennt sind. Die Aussparung wird hier durch die freien Stirnseiten der Überlappungsbereiche begrenzt, so dass die Laschen eine nur geringe Länge aufweisen können. Einer der Überlappungsbereiche ist jeweils an der innen liegenden Seitenfläche 9, der jeweils andere Überlappungsbereich, der derselben benachbarten Lasche zugeordnet ist, an der äußeren Seitenfläche 10 der Lasche angeordnet. Die Überlappungsbereiche 20 und 21 bzw. 22 und 23 liegen somit auf gegenüberliegenden Seiten der Laschenhauptebene E (siehe Figur 2b,d).

Die Ausdehnung der Überlappungsbereiche 20 bis 23 entspricht somit im Wesentlichen der Winkelerstreckung des Verschwenkwinkels zusätzlich zu der Stärke der Vorsprünge 25 bis 28, die als Mittel zur Aufnahme von in Längsrichtung der Energieführungskette wirkenden Zugkräften und/oder Druckkräften und unabhängig hiervon oder gleichzeitig als Anschläge dienen können.

Drei der Stirnseiten 20a, 22a, 23a der Überlappungsbereiche 20, 22, 23 stehen senkrecht zur Längsrichtung der Energieführungskette, wobei die vierte Stirnseite 21a des Überlappungsbereichs 21 mit der Energieführungskettenlängsrichtung einen Winkel W2 einschließt, der im Wesentlichen dem Verschwenkwinkel entspricht (Fig. 2c). Der Überlappungsbereich 21 ist somit an einer im Wesentlichen senkrecht zur Kettenlängsrichtung stehenden Stirnfläche des mittleren Laschenbereichs 24 angeordnet. Die Laschen weisen somit im Wesentlichen die Form zweier schiefwinkliger Parallelogramme auf, die zur Kettenlängsrichtung und zur entgegengesetzten Richtung schräggestellt sind. Die Stirnflächen eines Überlappungsbereichs sowie des mittleren Bereichs 24, d. h. die Flächen 21a und 24d sind hierbei fluchtend zueinander angeordnet, die Flächen 20a und 22a bzw. 23a und 24e weisen einen Längsversatz in Richtung der Energieführungskette auf (Fig. 2e).

Der mittlere Bereich 24a der Laschen, von dem die Überlappungsbereiche stirnseitig abgehen, weist somit zur Kettenlängsrichtung schräg verlaufenden Stirnseiten auf, so dass der mittlere Bereich sich auf beiden Stirnseiten sowie ober- und unterhalb der Gelenkelemente in Richtung auf die obere und untere Begrenzungsfläche verjüngt. Der mittlere Bereich besteht somit aus zwei im Wesentlichen dreieckigen oder trapezförmigen Bereichen, deren breite Basis auf Höhe der Gelenkelemente aneinander liegen.

Ferner wird zwischen mindestens einem der Querstege 4a, 4b und einem Überlappungsbereich ein Spalt 45 ausgebildet (Figur 1), in den in einer Anschlagstellung der Kettenglieder ein Überlappungsbereich des benachbarten Kettengliedes eingreifen kann. Nach dem Ausführungsbeispiel ist dies für die Anschlagstellungen bei geradliniger und vollständig verschwenkter Anschlagstellung gegeben.

An den Überlappungsbereichen 20 bis 23 sind jeweils seitlich in Richtung auf den Überlappungsbereich der benachbarten Lasche vorstehende Vorsprünge 25 bis 28 angeordnet, die die.Vorsprünge des seitlich gegenüberliegenden Überlappungsbereichs der benachbarten Lasche hintergreifen (Fig. 2d, e). Die Vorsprünge 26, 28 der Lasche 3, die einander diametral gegenüberliegen, sind hierbei Bestandteil eines Randes einer seitlich offenen Ausnehmung 30, 31. Aufgrund der paarweisen Anordnung der Überlappungsbereiche 20, 23 bzw. 21, 22 an gegenüberliegenden Seitenflächen der Laschen und der seitlich von den Überlappungsbereichen vorstehenden Vorsprünge 25 bis 28 sind die Laschen unter Verdrehung derselben aus der Laschenhauptebene aneinander vormontierbar, wonach anschließend die Gelenkelemente 8 in die Ausnehmungen 11 seitlich eingeführt werden können.

Des Weiteren sind die jeweils benachbarten Laschen mit einander in der Höhe übergreifenden Vorsprüngen versehen, die zumindest oder ausschließlich in der Anschlagstellung der benachbarten Kettenglieder bei gestreckter Anordnung der Energieführungskette einen Höhenversatz der benachbarten Laschen bzw. Kettenglieder zueinander verhindern. Vorzugsweise wird der Höhenversatz ausschließlich in der Anschlagstellung bei gestreckter Energieführungskette vollständig verhindert, so dass bei der Verschwenkbewegung der Kettenglieder zueinander eine Reibung von Bereichen der Kettenglieder aufeinander verhindert wird. Hierzu können die bogenförmigen Abschnitte 35 bis 38 (siehe Figur 2c), die die von den Überlappungsbereichen seitlich vorstehenden Vorsprünge 25, 27 ober- bzw. unterseitig umgreifen, nichtkreisbogenförmig ausgeführt sein, so dass einer oder,beide Vorsprünge 25, 27 in der Anschlagstellung der Kettenglieder bei gestreckter Energieführungskette und/oder vollständig abgewinkelter Kette mit der jeweiligen Oberseite 40, 41 (Fig. 2d) unter Verhinderung eines Höhenversatzes an den bogenförmigen Abschnitten anliegen. Es versteht sich, dass ein Höhenversatz auch dann verhindert wird, wenn die Ober- bzw. Unterkanten 40, 41 der Vorsprünge 25, 27 an den Abschnitten 36, 37 anliegen oder wenn Unter- und Oberkante eines Vorsprunges an den Abschnitten 36 und 38 anliegen. Zur Verhinderung eines Höhenversatzes können zusätzlich oder alternativ auch andere miteinander wechselwirkende Flächen vorgesehen sein. Gleichzeitig ist nach dem Ausführungsbeispiel Lage und Krümmung der bodenförmigen Abschnitte 36, 37 und der diesen zugewandten Flächen 40, 41 der Vorsprünge 25, 26 so gewählt, dass die benachbarten Kettenglieder in den Anschlagstellungen bei gestreckter und/oder gekrümmter Energieführungskette miteinander Verkeilen, indem sich die Vorsprünge an den bogenförmigen Flächen festsetzen und nur gegen eine geringe Kraft, die der Bewegung in die Anschlagstellung entgegengerichtet ist, voneinander lösbar sind. Das Höhenspiel der benachbarten Laschen zueinander besitzt in den beiden Anschlagstellungen somit ein Untermaß. Hierdurch wird in den Anschlagstellungen eine zusätzliche Steifigkeit der Kette erzielt.

Die Seitenlaschen 2 sind mit Paaren von korrespondierenden Anschlägen 50, 51 bzw. 52, 53 (Fig. 2e) versehen, die den Verschwenkwinkel bei linearer und bei verschwenkter Stellung der Kettenglieder zueinander begrenzen. Die Anschläge sind als kastenartige Vorsprünge ausgebildet, die von den mittleren Bereichen 24 der Laschen sich in der Hauptebene E der Laschen in Richtung auf die gegenüberliegende Lasche erstrecken, wobei nach dem Ausführungsbeispiel die vorstehenden Anschläge an den Laschen einander diametral gegenüberliegen und in Einbuchtungen in den korrespondierenden mittleren Bereichen der benachbarten Laschen eingreifen können. Die Anschläge grenzen hierbei unmittelbar an die Ausnehmungen 18 an, die die Gelenkelemente umgeben. Neben den Anschlägen 50 bis 53 können weitere Flächen der Laschen als Anschlagflächen zur Begrenzung der Verschwenkbewegungen dienen, beispielsweise die stirnseitigen Flächen der Vorsprünge 25, 27 oder die Stirnseiten der Überlappungsbereiche bzw. des mittleren Bereichs 24. Gleichzeitig können die die Anschläge 50 bis 53 auf der dem Gelenkelement 8 abgewandten Seite begrenzenden Flächen 55, 56 (Fig. 2c) den Höhenversatz der benachbarten Laschen zueinander begrenzen.

In den taschenartigen Einbuchtungen zur Aufnahme der als Anschläge wirkenden Vorsprünge sind als Mittel zur Geräuschdämpfung der bei der Betätigung der Anschläge entstehenden Geräusche Streifen 29 eines elastisch deformierbaren Materials mit höherem Elastizitätsmodul als das des Laschenmaterials auf der Anschlagfläche 28a für den Anschlag eingebracht. Alternativ oder zusätzlich kann, wie der Einfachheit halber an der gleichen Lasche veranschaulicht ist, der die Einbuchtung begrenzende Steg 29a elastisch deformierbar ausgeführt sein, wozu dieser aus einer geeigneten Wandstärke oder einem Material mit höherem Elastizitätsmodul als die angrenzenden Laschenabschnitte besteht.

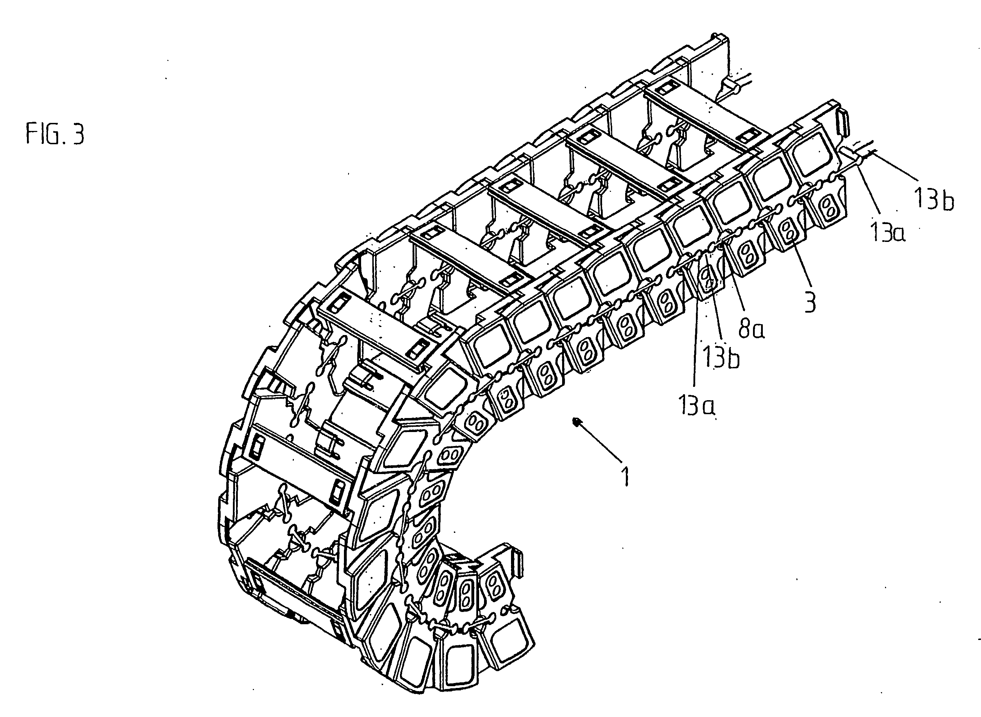

Figur 3 zeigt eine Abwandlung der Energieführungskette nach Figur 1, wobei der Unterschied darin besteht, dass sich das Gelenkelement 8a über mehrere Laschen, jeweils 4, erstreckt und mehrere in Kettenlängsrichtung unmittelbar aufeinander folgende Laschen gelenkig miteinander verbindet. Zwischen den Haltebereichen 13a der Gelenkelemente 8a sind Verbindungsstücke 13b vorgesehen, die eine geringere Breite als die Haltebereiche 13a aufweisen und in Nuten der Laschen angeordnet sind. 'Eine Vielzahl von Gelenkelementen 8a ist vorgesehen, um die Laschen eines Laschenstranges miteinander zu verbinden.

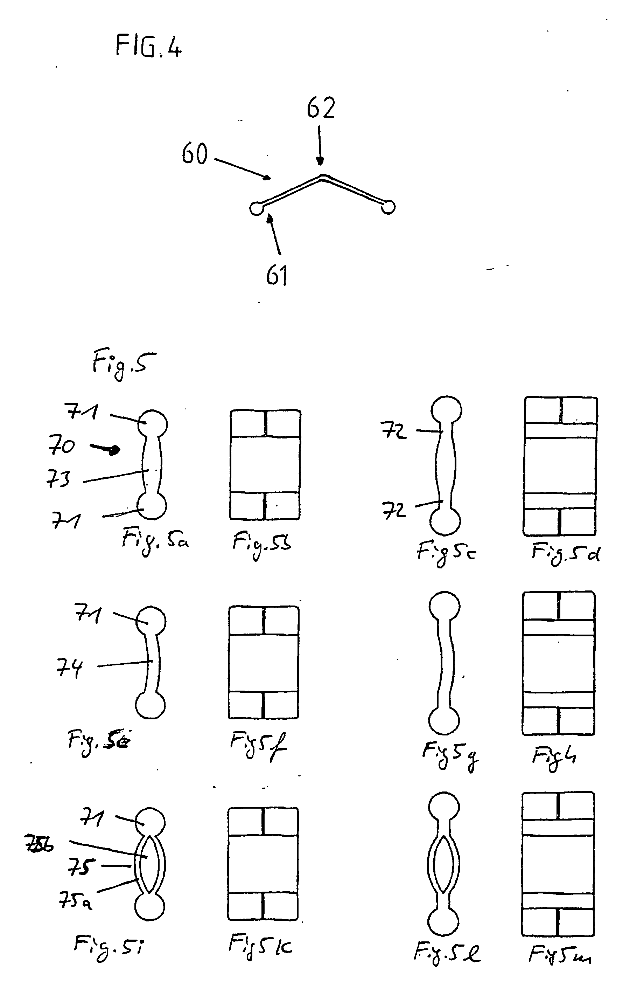

Figur 4 zeigt eine Abwandlung eines Gelenkelementes nach Figur 1 und 2, das im Unterschied zu diesem im demontierten Zustand nichtgestreckt ausgeführt ist. Das Gelenkelement 60 weist einen abgewinkelten mittleren Bereich 62 auf, der elastisch deformierbar ist, sowie an den beiden freien Enden Haltebereiche 61, für die das zu dem Gelenkelement nach Fig. 1 und 2 Gesagte gilt. Das Gelenkelement kann auch eine bogenförmige oder anders gekrümmte Gestalt aufweisen. Es kann auch wie das Gelenkelement 8a nach Figur 3 mehrere Laschen miteinander gelenkig verbinden. Das Gelenkelement 60 kann in gestreckter Anordnung in Ausnehmungen der Laschen demontiert werden und so bei gestreckter Kette unter Vorspannung an den Laschen anliegen. Es kann auch ohne Vorspannung in entsprechend gestalteten Ausnehmungen der Laschen angeordnet sein.

Das Gelenkelement kann auch durch andere Modifizierung an die jeweiligen Erfordernisse angepasst erden, z.B. durch Einschnürungen im elastisch deformierbaren Bereich, die z.B. in Art eines Filmscharniers ausgeführt sein kann.

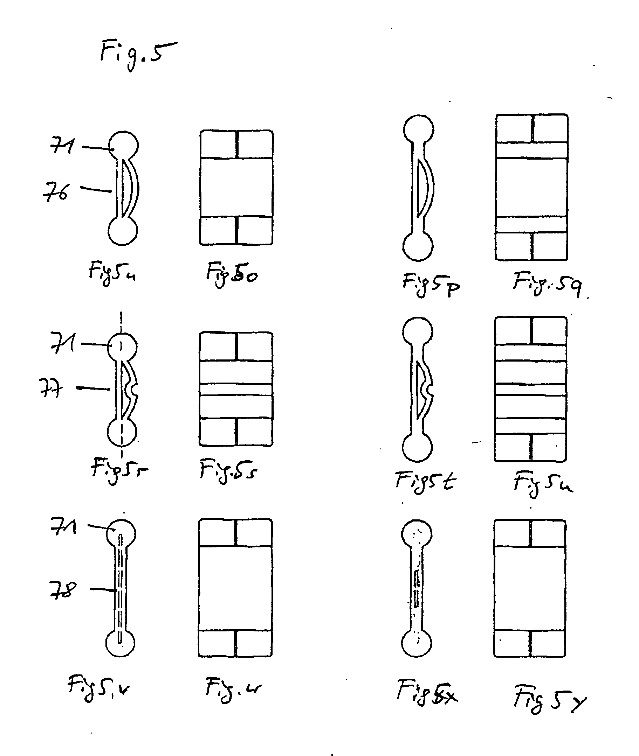

Figur 5 zeigt verschiedene Gelenkelemente 70 mit unterschiedlichen Querschnitten bzw. Materialstärken zwischen den jeweils gegenüberliegenden Haltebereichen 71 zur Festlegung an benachbarten Laschen. Die Halteelemente in den beiden rechten Spalten unterscheiden sich von denen der beiden linken Spalten jeweils durch die zwischen den Haltebereichen 71 und den mittleren Bereich mit unterschiedlichen Querschnittsgeometrien oder Materialstärken durch Verbindungsbereiche 72 mit jeweils gleichbleibendem Querschnitt bei gleicher Ausgestaltung der mittleren Gelenkbereiche 73-78. Es versteht sich, dass auch die Ausgestaltung der Verbindungsbereiche variabel ist.

Der Gelenkbereich 73 nach Fig. 5a verdickt sich von den Haltebereichen 71 zur Mitte des Gelenkelementes hin in der Richtung der Laschenhauptebene bei montiertem Gelenkelement. Die Verdickung erfolgt hier kontinuierlich und in Richtung auf die Mitte hin in abnehmendem Ausmaß.

Nach Fig. 5e,f ist der mittlere Gelenkbereich 74 bogenförmig ausgebildet, wobei der Bogen in der Laschenhauptebene bei montiertem Gelenkelement gewölbt ist.

Nach Fig. 5i,k besteht der mittlere Gelenkbereich 75 aus zwei gegensinnig nach außen gewölbten Materialsträngen 75a mit einem dazwischenliegenden beidseitig offenen Hohlraum 75b. Die Materialstränge nach Fig. 51 haben insgesamt die Stärke des Verbindungsbereichs, ohne hierauf beschränkt zu sein.

Fig. 5n,o zeigt ein Gelenkelement mit mittlerem Gelenkbereich 76 aus mehreren, hier zwei, Materialsträngen unterschiedlicher Geometrie. Ein Materialstrang ist hierbei geradlinig, der andere nach außengebogen.

Fig. 5r, s zeigt eine Abwandlung des Gelenkelementesi nach Fig. 5n,o wobei einer der Materialstränge, hier der gewölbte, eine zur Mittellinie (gestrichelt) hin weisende Einbuchtung aufweist, die eine Abwinkelung in der Laschenhauptebene bei montiertem Gelenkelement erleichtert.

Fig. 5v,w zeigt ein Gelenkelement bei dem der mittlere Gelenkbereich 78 bei gleichbleibendem Außenquerschnitt eine Materialschwächung in Form eines inneren Hohlraumes (gestrichelt) aufweist, der hier nach außengeschlossen ist. Alternativ kann z.B. der mittlere Gelenkbereich auch geschlitzt sein, vorzugsweise ist die Schlitzebene senkrecht zur Laschenhauptebene oder Abwinkelungsebene angeordnet.

### Bezugszeichenliste

- 1: Energieführungskette
- 2: Kettenglied
- 3: Lasche
- 4a,4b: Quersteg
- 5: Untertrum
- 6: Umlenkbereich
- 7: Obertrum
- 8, 8a: Gelenkelement
- 9, 10: Seitenfläche
- 11: Ausnehmung
- 12: mittlerer Bereich
- 13,13a: Haltebereich
- 13b: Verbindungsbereich
- 14: Fläche
- 15: Querschnittserweiterung
- 16, 17: Stirnseite
- 16a: Nut
- 18: Ausnehmung
- 19: Rand
- 20-23: Überlappungsbereich
- 24: mittlerer Bereich
- 24a: Steg
- 24b: Aussparung
- 25-28: Vorsprung
- 28a: Anschlagfläche
- 29: Dämpfungsstreifen
- 29a: Steg
- 30, 31: Ausnehmung
- 35-38: gebogener Abschnitt
- 40, 41: Oberseite
- 45: Spalt
- 50-53: Anschlag
- 55, 56: Begrenzungsfläche
- 60: Gelenkelement
- 61: Haltebereich
- 62: mittlerer Bereich
- 70: Gelenkelement
- 71: Haltebereich
- 72: Verbindungsbereich
- 73-78: mittlerer Gelenkbereich
- 75a: Materialstrang
- 75b: Hohlraum
- E: Laschenhauptebene
- R: Richtung
- W1, W2: Winkel

## Patentansprüche

1. Energieführungskette zur Führung von Schläuchen, Kabeln oder dergleichen mit einer Anzahl von Kettengliedern, wobei benachbarte Kettenglieder jeweils gelenkig miteinander verbunden sind, wobei die Kettenglieder gegenüberliegende Laschen mit inneren und äußeren Seitenflächen und dazu senkrechten und zur Längsrichtung der Kette im Wesentlichen parallelen Schmalflächen aufweisen, mindestens einige der Kettenglieder mindestens einen die Laschen verbindenden Quersteg aufweisen, die Gelenkverbindung benachbarter Kettenglieder zwischen den Schmalflächen der Laschen angeordnet ist und die Energieführungskette unter Bildung eines Untertrums, eines Umlenkbereichs und eines Obertrums verfahrbar ist, **dadurch gekennzeichnet, dass** die Gelenkverbindung durch in Abwinkelungsrichtung der Kettenglieder (1) deformierbare Gelenkelemente (8) gebildet wird, die als separate Bauteile ausgeführt sind, und dass die Gelenkelemente (8) sich zumindest teilweise zwischen der inneren und äußeren Seitenfläche der Laschen (3) erstrecken.

2. Energieführungskette nach Anspruch 1, **dadurch gekennzeichnet, dass** die Gelenkelemente (8) sich gänzlich zwischen der inneren und äußeren Seitenfläche der Laschen (2) erstrecken.

3. Energieführungskette nach Anspruch 1 oder 2, **dadurch gekennzeichnet, dass** die Laschen (2) jeweils Befestigungselemente für einen oberen und einen unteren Quersteg (4a, b) aufweisen und dass die Gelenkelemente (8) in der Höhe zwischen den Befestigungselementen und von diesen beabstandet an den Laschen (3) angeordnet sind.

4. Energieführungskette nach einem der Ansprüche 1 bis 3, **dadurch gekennzeichnet, dass** die Gelenkelemente (8) als Federelemente ausgeführt sind, welche bei einer Abwinkelung benachbarter Kettenglieder elastische Rückstellkräfte auf die Kettenglieder (2) ausüben, die eine zumindest teilweise Rückstellbewegung der Kettenglieder (2) entgegen der Abwinkelungsrichtung bewirken.

5. Energieführungskette nach einem der Ansprüche 1 bis 4, **dadurch gekennzeichnet, dass** die Länge der elastisch deformierbaren Bereiche der Gelenkelemente jeweils ein Mehrfaches der Stärke des jeweiligen Gelenkelementes in der Abwinkelungsrichtung der Kettenglieder (2) beträgt.

6. Energieführungskette nach einem der Ansprüche 1 bis 5, **dadurch gekennzeichnet, dass** die Gelenkelemente als im Wesentlichen plattenartige Bauteile ausgeführt sind.

7. Energieführungskette nach einem der Ansprüche 1 bis 5, **dadurch gekennzeichnet, dass** die Gelenkelemente als in der Ebene parallel zu der inneren und äußeren Seitenfläche der Laschen gekrümmte Bauteile ausgebildet sind.

8. Energieführungskette nach einem der Ansprüche 1 bis 7, **dadurch gekennzeichnet, dass** die Gelenkelemente (8) gegen eine Verschiebung in Längsrichtung der Energieführungskette (1) gesichert an den Laschen (3) befestigt sind.

9. Energieführungskette nach einem der Ansprüche 1 bis 8, **dadurch gekennzeichnet, dass** die Gelenkelemente (8) in Ausnehmungen (11) der Laschen (2) angeordnet sind, die zumindest zu einer Seitenfläche (9, 10) der Laschen (3) hin offen ausgeführt sind.

10. Energieführungskette nach Anspruch 9, **dadurchgekennzeichnet**, dass die Laschen (3) sich oberund unterhalb der Gelenkelemente (8) erstreckende Bereiche aufweisen (20-23, 24), die durch einen Steg (24a) miteinander verbunden sind, der in Kettenlängsrichtung zwischen den elastisch deformierbaren Bereichen der beiden Gelenkelemente (8), die die Lasche (3) jeweils mit benachbarten Laschen verbindet, angeordnet ist.

11. Energieführungskette nach Anspruch 9 oder 10, **dadurch gekennzeichnet, dass** an den Laschen (2) und den Gelenkelementen (8) zusammenwirkende Mittel vorgesehen sind, die die Gelenkelemente (8) gegen eine Drehbewegung quer zu den Laschen (2) sichern.

12. Energieführungskette nach einem der Ansprüche 1 bis 11, **dadurch gekennzeichnet, dass** zumindest eine der jeweils benachbarten Laschen (3) auf Höhe des die benachbarten Laschen verbindenden Gelenkelementes (8) eine stirnseitig offene Ausnehmung (18) aufweist, die zumindest auf der in Abwinkelungsrichtung der Kettenglieder (2) liegenden Seite des Gelenkelementes (8) angeordnet ist und durch die sich das Gelenkelement (8) mit einem elastisch deformierbaren Bereich (12) erstreckt.

13. Energieführungskette nach einem der Ansprüche 1 bis 12, **dadurch gekennzeichnet, dass** an den jeweils benachbarten Laschen (3) druck- und/oder zugkraftaufnehmende Mittel vorgesehen sind, vorzugsweise in Form von Vorsprüngen (25, 27) und an den jeweils benachbarten Laschen hinterschnittenen Bereichen (26, 28), die von den Vorsprüngen der Laschen hintergreifbar sind, wobei die Vorsprünge (25, 27) zumindest bei langgestreckter Anordnung der Energieführungskette (1) druck- und/oder zugkraftaufnehmend an den hinterschnittenen Bereichen (26, 28) anliegen.

14. Energieführungskette nach einem der Ansprüche 1 bis 13, **dadurch gekennzeichnet, dass** die Laschen (3) sich in Richtung auf die benachbarten Laschen erstreckende, die benachbarten Laschen seitlich umgreifende Überlappungsbereiche (20-23) aufweisen.

15. Energieführungskette nach Anspruch 14, **dadurch ge-kennzeichnet, dass** die Laschen jeweils zwei einer benachbarten Lasche (3) zugeordnete Überlappungsbereiche (20, 21; 22, 23) aufweisen, wobei ein erster Überlappungsbereich oberhalb und ein zweiter Überlappungsbereich unterhalb des die Laschen verbindenden Gelenkelementes (8) vorgesehen ist, und dass die ober- und unterhalb der Gelenkverbindung angeordneten Überlappungsbereiche (20, 21; 22, 23) durch eine Aussparung (24b) in der Höhe voneinander getrennt sind.

16. Energieführungskette nach Anspruch 14 oder 15, **dadurch ge-kennzeichnet, dass** die jeweils einer benachbarten Lasche zugeordneten Überlappungsbereiche (20, 21; 22, 23) einer Lasche an gegenüberliegenden Seitenflächen (9, 10) der Lasche (3) angeordnet sind.

17. Energieführungskette nach einem der Ansprüche 14 bis 16, **dadurch gekennzeichnet, dass** die Laschen (3) zumindest zwei Überlappungsbereiche (21, 23) aufweisen, deren einer benachbarten Lasche zugewandten Stirnseiten (20a-23a) zu einer senkrecht zur Kettenlängsrichtung stehenden, in der Laschenhauptebene (E) liegenden Richtung (R) unterschiedliche Winkel (W1, W2) aufweisen.

18. Energieführungskette nach einem der Ansprüche 14 bis 17, **dadurch gekennzeichnet, dass** zumindest in einer Anschlagstellung der benachbarten Kettenglieder (2) zueinander die Enden zumindest eines der Querstege (4) den Überlappungsbereich (20) einer benachbarten Lasche seitlich umgreifen.

19. Energieführungskette nach einem der Ansprüche 1 bis 18, **dadurch gekennzeichnet, dass** die Laschen zusammenwirkende paarweise Anschläge (50-53) zur Begrenzung des Verschwenkwinkels und Versteifung im Radius und in der Strecklage benachbarter Kettenglieder (2) zueinander aufweisen.

20. Energieführungskette nach Anspruch 19, **dadurch gekennzeichnet, dass** die Anschläge (50-53) benachbart einer die Gelenkelemente (8) mit Spiel umgebende Ausnehmung (18) angeordnet sind.

21. Energieführungskette nach Anspruch 19 oder 20, **dadurch gekennzeichnet, dass** die Anschläge (50-53) von einem mittleren Bereich (25) der Laschen stirnseitig in Richtung auf die benachbarte Lasche vorstehen.

22. Energieführungskette nach einem der Ansprüche 1 bis 21, **dadurch gekennzeichnet, dass** benachbarte Laschen einander in der Höhe übergreifende Bereiche (36, 40; 55, 56) aufweisen, die zumindest bei langgestreckter Anordnung der Energieführungskette einen Höhenversatz der benachbarten Kettenglieder zueinander verhindern.

23. Energieführungskette nach einem der Ansprüche 19 bis 21, **dadurch gekennzeichnet, dass** an gegenüberliegenden Laschen (3) miteinander zusammenwirkende Mittel (40, 41; 36, 37) vorgesehen sind, die in Anschlagstellung der Kettenglieder (2) bei gestreckter und/oder gebogener Energieführungskette eine gegenseitige Verkeilung der benachbarten Kettenglieder miteinander bewirken.

24. Energieführungskette nach einem der Ansprüche 1 bis 23, **dadurch gekennzeichnet, dass** die Gelenkelemente (8,8a) eine Anzahl von Laschen (3) gelenkig miteinander verbindet, wobei die Anzahl der Laschen (3) zwischen zwei und einer Anzahl liegt, die geringer als die Anzahl der die Energieführungskette (1) bildenden Kettenglieder (2) ist.

25. Energieführungskette nach einem der Ansprüche 1 bis 24, **dadurch gekennzeichnet, dass** Mittel (29) zur Dämpfung der Auftreffgeschwindigkeit der Anschläge (25, 26) auf die korrespondierenden Anschlagflächen (28a) vorsehen sind.

26. Energieführungskette nach einem der Ansprüche 1 bis 25, **dadurch gekennzeichnet, dass** zumindest ein Gelenkelement (8) mit zwei an benachbarten Laschen (3) festlegbaren Haltebereichen vorgesehen ist, und dass zwischen den Haltebereichen zumindest zwei Bereiche des Gelenkelementes (8) mit zumindest einer unterschiedlichen Eigenschaft ausgewählt aus der Gruppe Querschnitt, Materialstärke, Elastizitätsmodul vorgesehen sind.

27. Energieführungskette nach einem der Ansprüche 1 bis 26, **dadurch gekennzeichnet, dass** die Gelenkelemente (8) und die Laschen (2) aus unterschiedlichen Materialien bestehen.

28. Energieführungskette nach einem der Ansprüche 1 bis 27, **dadurch gekennzeichnet, dass** die Gelenkelemente (8) elastisch deformierbar sind.

29. Energieführungskette nach einem der Ansprüche 1 bis 28, **dadurch gekennzeichnet, dass** das jeweilige Gelenkelement (8) mit Haltebereichen in beiden benachbarten Seitenlaschen (3) paßgenau eingreift, um die in Längsrichtung der Energieführungskette wirkende Zugkräfte aufzunehmen.

30. Energieführungskette nach einem der Ansprüche 1 bis 29, **dadurch gekennzeichnet, dass** das Gelenkelement (8a) als bandförmiges Bauteil ausgeführt ist und mehrere Kettenglieder (2) gelenkig miteinander verbindet.

## Claims

1. Energy guiding chain for guiding hoses, cables or the like that has numerous chain links, where adjacent chain links are connected to one another in articulated fashion, where the chain links have opposing straps with inside and outside lateral surfaces as well as narrow surfaces perpendicular thereto and essentially parallel to the longitudinal direction of the chain, at least some of the chain links have at least one cross-member connecting the straps, the articulated joint between adjacent chain links is located between the narrow surfaces of the straps, and the energy guiding chain can travel, forming a lower strand, a deflection zone and an upper strand, **characterised in that** the articulated joint consists of joint elements (8) that are deformable in the bending direction of the chain links (1) and designed as separate components, and **in that** the joint elements (8) extend at least partially between the inside and outside lateral surfaces of the straps (3).

2. Energy guiding chain according to Claim 1, **characterised in that** the joint elements (8) extend entirely between the inside and outside lateral surfaces of the straps (3).

3. Energy guiding chain according to Claim 1 or 2, **characterised in that** the straps (3) each have mounting elements for an upper and lower cross-member (4a, b), and **in that** the joint elements (8) are located on the straps (3) at some vertical distance between the mounting elements and at a distance from them.

4. Energy guiding chain according to one of Claims 1 to 3, **characterised in that** the joint elements (8) are designed as spring elements that exert elastic restoring forces on the chain links (2) when adjacent chain links are bent, these forces triggering at least partial return motion of the chain links (2) against the direction of bending.

5. Energy guiding chain according to one of Claims 1 to 4, **characterised in that** the length of the elastically deformable areas of the joint elements is a multiple of the thickness of the respective joint element in the direction of bending of the chain links (2).

6. Energy guiding chain according to one of Claims 1 to 5, **characterised in that** the joint elements are essentially designed as plate-like components.

7. Energy guiding chain according to one of Claims 1 to 5, **characterised in that** the joint elements are designed as components that are curved in the plane parallel to the inside and outside lateral surfaces of the straps.

8. Energy guiding chain according to one of Claims 1 to 7, **characterised in that** the joint elements (8) are secured on the straps (3) so as to prevent their shifting in the longitudinal direction of the energy guiding chain (1).

9. Energy guiding chain according to one of Claims 1 to 8, **characterised in that** the joint elements (8) are located in recesses (11) in the straps (3), which are of open design on at least one lateral surface (9, 10) of the straps (3).

10. Energy guiding chain according to Claim 9, **characterised in that** the straps (3) have areas (20-23, 24) extending above and below the joint elements (8), which are connected by a web (24a), which is located in the longitudinal direction of the chain between the elastically deformable areas of the two joint elements (8) that connect a strap (3) to the respectively adjacent straps.

11. Energy guiding chain according to Claim 9 or 10, **characterised in that** the straps (3) and the joint elements (8) have interacting means that protect the joint elements (8) against torsional motion transverse to the straps (3).

12. Energy guiding chain according to one of Claims 1 to 11, **characterised in that** that at least one of the respectively adjacent straps (3) has a recess (18) at the height of the joint element (8) connecting the adjacent straps, which is open at the face end and located at least on the side of the joint element (8) facing in the direction of bending of the chain links (2), and through which an elastically deformable area (12) of the joint element (8) extends.

13. Energy guiding chain according to one of Claims 1 to 12, **characterised in that** respectively adjacent straps (3) are provided with means to absorb compression and/or tension forces, preferably in the form of projections (25, 27) and undercuts (26, 28), which are located on the respectively adjacent straps and around which the projections on the straps can reach, where the projections (25, 27) contact the undercuts (26, 28) to absorb compression and/or tension forces, at least when the energy guiding chain (1) is in straight position.

14. Energy guiding chain according to one of Claims 1 to 13, **characterised in that** the straps (3) have overlapping areas (20-23) extending in the direction of the adjacent straps that reach around the sides of the adjacent straps.

15. Energy guiding chain according to Claim 14, **characterised in that** the straps each have two overlapping areas (20, 21; 22, 23) associated with an adjacent strap (3), where a first overlapping area is above, and a second below the joint element (8) connecting the straps, and **in that** the overlapping areas (20, 21; 22, 23) above and below the articulated joint are separated from one another vertically by a cut-out (24b).

16. Energy guiding chain according to Claim 14 or 15, **characterised in that** the overlapping areas (20, 21; 22, 23) of a strap, which are each associated with one adjacent strap, are located on opposite lateral surfaces (9, 10) of the strap (3).

17. Energy guiding chain according to one of Claims 14 to 16, **characterised in that** the straps (3) have at least two overlapping areas (21, 23), whose face ends (20a-23a) that face an adjacent strap form different angles (W1, W2) to a direction (R) that is perpendicular to the longitudinal direction of the chain and lies in the primary strap plane (E).

18. Energy guiding chain according to one of Claims 14 to 17, **characterised in that** the ends of at least one of the cross-members (4) reaches around the side of the overlapping area (20) of an adjacent strap, at least in one limit position of the adjacent chain links (2) relative to one another.

19. Energy guiding chain according to one of Claims 1 to 18, **characterised in that** the straps have interacting, paired stops (50-53) to limit the pivoting angle and to provide rigidity in the bent and straight position of adjacent chain links (2) relative to one another.

20. Energy guiding chain according to Claim 19, **characterised in that** the stops (50-53) are adjacent to a recess (18) that surrounds the joint elements (8) with a degree of play.

21. Energy guiding chain according to Claim 19 or 20, **characterised in that** the stops (50-53) protrude from the face ends of a central area (25) of the straps towards the adjacent strap.

22. Energy guiding chain according to one of Claims 1 to 21, **characterised in that** adjacent straps are provided with areas (36, 40; 55, 56), which overlap one another vertically and prevent vertical displacement of adjacent chain links relative to one another, at least when the energy guiding chain is in straight position.

23. Energy guiding chain according to one of Claims 19 to 21, **characterised in that** opposing straps (3) are provided with interacting means (40, 41; 36, 37), which cause adjacent chain links to become wedged together when the chain links (2) are in the limit position when the energy guiding chain is straight and/or bent.

24. Energy guiding chain according to one of Claims 1 to 23, **characterised in that** the joint elements (8, 8a) connect a number of straps (3) to one another in articulated fashion, where the number of straps (3) is between two and a number that is less than the number of chain links (2) forming the energy guiding chain (1).

25. Energy guiding chain according to one of Claims 1 to 24, **characterised in that** means (29) are provided for damping the impact velocity of the stops (25, 26) against the corresponding stop surfaces (28a).

26. Energy guiding chain according to one of Claims 1 to 25, **characterised in that** at least one joint element (8) is provided, which has two mounting areas that can be connected to adjacent straps (3), and **in that** at least two areas of the joint element (8) located between the mounting areas are provided, which have at least one different characteristic selected from the group: cross-section, material thickness, modulus of elasticity.

27. Energy guiding chain according to one of Claims 1 to 26, **characterised in that** the joint elements (8) and the straps (3) are made of different materials.

28. Energy guiding chain according to one of claims 1 to 27, **characterised in that** the joint elements (8) are prevented from disconnection from the straps perpendicular to the primary plane of the straps and/or from rotating transverse to the straps by means of a force-form- and/or bonded-connection to the straps.

29. Energy guiding chain according to one of claims 1 to 28, **characterised in that** the joint element (8) is elastically deformable.

30. Energy guiding chain according to one of claims 1 to 29, **characterised in that** the joint element is designed as a strip-like component connecting a plurality with chain links together in pivoting fashion.

## Revendications

1. Chaîne de guidage d'énergie pour guider des tuyaux flexibles, des câbles ou similaires avec un nombre d'éléments de chaîne, dans laquelle les éléments de chaîne voisins sont attachés respectivement les uns aux autres de manière articulée, sachant que les éléments de chaîne comportent des joues face à face avec des surfaces latérales intérieures et extérieures et, verticalement dans la direction longitudinale de la chaîne, des surfaces étroites essentiellement parallèles, qu'au moins quelques-uns des éléments de chaîne comportent au moins une entretoise transversale reliant les joues, que les liaisons articulées d'éléments de chaîne voisins sont disposées entre les surfaces étroites des joues et que la chaîne de guidage d'énergie est mobile moyennant la formation d'un brin inférieur, d'une zone de renvoi et d'un brin supérieur, **caractérisée en ce que** la liaison articulée est formée par des éléments d'articulation (8) déformables dans la direction du coudage des éléments de chaîne (1), qui sont exécutés comme composants séparés, et **en ce que** les éléments d'articulation (8) s'étendent au moins partiellement entre les surfaces latérales intérieure et extérieure des joues (3).

2. Chaîne de guidage d'énergie selon la revendication 1, **caractérisée en ce que** les éléments d'articulation (8) s'étendent complètement entre les surfaces latérales intérieure et extérieure des joues (3).

3. Chaîne de guidage d'énergie selon la revendication 1 ou 2, **caractérisée en ce que** les joues (3) comportent respectivement des éléments de fixation pour des entretoises transversales (4a, b) supérieures et inférieures et **en ce que** les éléments d'articulation (8) sont disposés sur les joues (3) en hauteur entre les éléments de fixation et à distance de ceux-ci.

4. Chaîne de guidage d'énergie selon l'une quelconque des revendications 1 à 3, **caractérisée en ce que** les éléments d'articulation (8) sont exécutés comme éléments élastiques qui, lors d'un coudage d'éléments de chaîne voisins, exercent des forces élastiques de rappel sur les éléments de chaîne (2), qui provoquent un mouvement de rappel au moins partiel des éléments de chaîne (2) à l'encontre de la direction du coudage.

5. Chaîne de guidage d'énergie selon l'une quelconque des revendications 1 à 4, **caractérisée en ce que** la longueur des zones élastiquement déformables des éléments d'articulation est respectivement un multiple de l'épaisseur de l'élément d'articulation respectif dans la direction du coudage des éléments de chaîne (2).

6. Chaîne de guidage d'énergie selon l'une quelconque des revendications 1 à 5, **caractérisée en ce que** les éléments d'articulation sont exécutés comme composants essentiellement en forme de plaque.

7. Chaîne de guidage d'énergie selon l'une quelconque des revendications 1 à 5, **caractérisée en ce que** les éléments d'articulation sont configurés comme composants curvilignes dans le plan parallèle aux surfaces latérales intérieures et extérieures des joues.

8. Chaîne de guidage d'énergie selon l'une quelconque des revendications 1 à 7, **caractérisée en ce que** les éléments d'articulation (8) sont fixés aux joues (3), freinés contre un décalage dans la direction longitudinale de la chaîne de guidage d'énergie (1).

9. Chaîne de guidage d'énergie selon l'une quelconque des revendications 1 à 8, **caractérisée en ce que** les éléments d'articulation (8) sont disposés dans des évidements (11) des joues (2), qui sont exécutés ouverts au moins vers une surface latérale (9, 10) des joues (3).

10. Chaîne de guidage d'énergie selon la revendication 9, **caractérisée en ce que** les joues (3) comportent des zones (20-23, 24) s'étendant au-dessus et en dessous des éléments d'articulation (8), qui sont reliées ensemble par un pont (24a) qui, dans la direction longitudinale de la chaîne, est situé entre les parties élastiquement déformables des deux éléments d'articulation (8) qui relient respectivement la joue (3) aux joues voisines.

11. Chaîne de guidage d'énergie selon la revendication 9 ou 10, **caractérisée en ce que** des moyens concourants sont prévus sur les joues (2) et sur les éléments d'articulation (8), moyens qui freinent les éléments d'articulation (8) contre un mouvement de rotation transversalement par rapport aux joues (2).

12. Chaîne de guidage d'énergie selon l'une quelconque des revendications 1 à 11, **caractérisée en ce qu'**à la hauteur de l'élément d'articulation (8) reliant les joues voisines, au moins une des joues (3) respectivement voisines comporte un évidement (18) ouvert côté frontal, qui est disposé au moins du côté de l'élément d'articulation (8) se trouvant dans la direction du coudage des éléments de chaîne (2) et à travers lequel l'élément d'articulation (8) s'étend par une zone (12) élastiquement déformable.

13. Chaîne de guidage d'énergie selon l'une quelconque des revendications 1 à 12, **caractérisée en ce que** sur les joues (3) respectivement voisines sont prévus des moyens supportant des forces de pression et/ou de traction, de préférence en forme de saillies (25, 27), et sur les joues respectivement voisines des zones à contre-dépouille (26, 28), où peuvent venir en prise les saillies des joues, sachant qu'au moins pour une disposition étendue en longueur de la chaîne de guidage d'énergie (1), les saillies (25, 27) s'appliquent sur les zones à contre-dépouille (26, 28) de façon à supporter les forces de pression et/ou de traction.

14. Chaîne de guidage d'énergie selon l'une quelconque des revendications 1 à 13, **caractérisée en ce que** les joues (3) comportent des zones de chevauchement (20-23) s'étendant dans la direction vers les joues voisines, qui sont en prise latéralement avec les joues voisines.

15. Chaîne de guidage d'énergie selon la revendication 14, **caractérisée en ce que** les joues comportent respectivement deux zones de chevauchement (20, 21 ; 22, 23) affectées à une joue (3) voisine, sachant qu'une première zone de chevauchement est prévue au-dessus et une deuxième zone de chevauchement en dessous de l'élément d'articulation (8) qui relie les joues, et **en ce que** les zones de chevauchement (20, 21 ; 22, 23) disposées au-dessus et en dessous de l'élément d'articulation (8) sont séparées l'une de l'autre en hauteur par un évidement (24b).

16. Chaîne de guidage d'énergie selon la revendication 14 ou 15, **caractérisée en ce que** les zones de chevauchement (20, 21 ; 22, 23) d'une joue affectées respectivement à une joue voisine sont disposées sur des surfaces latérales (9, 10) opposées de la joue (3).

17. Chaîne de guidage d'énergie selon l'une quelconque des revendications 14 à 16, **caractérisée en ce que** les joues (3) comportent au moins deux zones de chevauchement (21, 23), dont les faces frontales (20a-23a) tournées vers une joue voisine présentent des angles différents (W1, W2) par rapport à une direction (R) se trouvant perpendiculaire à la direction longitudinale de la chaîne et située dans le plan principal de la joue (E).

18. Chaîne de guidage d'énergie selon l'une quelconque des revendications 14 à 17, **caractérisée en ce qu'**au moins dans une position en butée des éléments de chaîne (2) voisins l'un par rapport à l'autre, les extrémités d'au moins une des entretoises transversales (4) sont en prise latéralement sur la zone de chevauchement (20) d'une joue voisine.

19. Chaîne de guidage d'énergie selon l'une quelconque des revendications 1 à 18, **caractérisée en ce que** les joues comportent des butées (50-53) concourantes en paires pour la limitation de l'angle de débattement et pour le raidissement dans le rayon et dans la position d'étirement d'éléments de chaîne (2) voisins l'un par rapport à l'autre.

20. Chaîne de guidage d'énergie selon la revendication 19, **caractérisée en ce que** les butées (50-53) sont disposés au voisinage d'un évidement (18) entourant avec jeu les éléments d'articulation (8).

21. Chaîne de guidage d'énergie selon la revendication 19 ou 20, **caractérisée en ce que** les butées (50-53) dépassent d'une zone moyenne (25) des joues côté frontal en direction de la joue voisine.

22. Chaîne de guidage d'énergie selon l'une quelconque des revendications 1 à 21, **caractérisée en ce que** des joues voisines comportent des zones (36, 40 ; 55, 56) en prise en hauteur les unes sur les autres qui, au moins dans la disposition étendue en longueur de la chaîne de guidage d'énergie, empêchent un décalage en hauteur des éléments de chaîne voisins l'un par rapport à l'autre.

23. Chaîne de guidage d'énergie selon l'une quelconque des revendications 19 à 21, **caractérisée en ce que** sur des joues (3) opposées sont prévus des moyens (40, 41 ; 36, 37) concourant les uns avec les autres qui, en position de butée des éléments de chaîne (2), la chaîne de guidage d'énergie étant tendue et/ou courbée, provoquent un clavetage réciproque des éléments de chaîne voisins l'un avec l'autre.

24. Chaîne de guidage d'énergie selon l'une quelconque des revendications 1 à 23, **caractérisée en ce que** les éléments d'articulation (8, 8a) relient de manière articulée un nombre de joues (3), sachant que le nombre de joues (3) est compris entre deux et un nombre qui est plus petit que le nombre des éléments de chaîne (2) formant la chaîne de guidage d'énergie (1).

25. Chaîne de guidage d'énergie selon l'une quelconque des revendications 1 à 24, **caractérisée en ce que** des moyens (29) sont prévus pour l'amortissement de la vitesse d'incidence des butées (25, 26) sur les surfaces de butée (28a) correspondantes.

26. Chaîne de guidage d'énergie selon l'une quelconque des revendications 1 à 25, **caractérisée en ce qu'**il est prévu au moins un élément d'articulation (8) avec deux zones de maintien pouvant être fixées sur des joues (3) voisines, et **en ce qu'**entre les zones de maintien sont prévues au moins deux zones de l'élément d'articulation (8) avec au moins une propriété différente, choisie dans le groupe : section, épaisseur du matériau, module d'élasticité.

27. Chaîne de guidage d'énergie selon l'une quelconque des revendications 1 à 26, **caractérisée en ce que** les éléments d'articulation (8) et les joues (2) consistent en des matériaux différents.

28. Chaîne de guidage d'énergie selon l'une quelconque des revendications 1 à 27, **caractérisée en ce que** les éléments d'articulation (8) sont déformables élastiquement.

29. Chaîne de guidage d'énergie selon l'une quelconque des revendications 1 à 28, **caractérisée en ce que** l'élément d'articulation (8) respectif vient en prise sans jeu avec des zones de maintien dans les deux joues latérales voisines, pour supporter les forces de traction agissant dans la direction longitudinale de la chaîne de guidage d'énergie.

30. Chaîne de guidage d'énergie selon l'une quelconque des revendications 1 à 29, **caractérisée en ce que** l'élément d' articulation (8a) est réalisé comme composant en forme de ruban et relie ensemble de façon articulée plusieurs éléments de chaîne (2).
